# EUROPÄISCHE PATENTSCHRIFT

(11) **EP 2 040 402 B1**
(45) Veröffentlichungstag und Bekanntmachung des Hinweises auf die Patenterteilung: **10.10.2012**
(21) Anmeldenummer: 09100001.8
(22) Anmeldetag: 24.11.2000
(51) Int. Cl.: H04J 3/06, B60R 16/02, G06F 1/14, H04L 12/42

(54) **Verfahren und Vorrichtung zum Austausch von Daten zwischen wenigstens zwei mit einem Bussystem verbundenen Teilnehmern**
Method and device for data exchange between at least two subscribers connected by a bus system
Procédé et dispositif d'échange de données entre au moins deux abonnés connectés par un système de bus

(30) Priorität: 05.01.2000 DE 10000304
(43) Veröffentlichungstag der Anmeldung: 25.03.2009
(62) Teilanmeldung aus: 00125722.9
(73) Patentinhaber: ROBERT BOSCH GMBH, 70442 Stuttgart (DE)
(72) Erfinder: Hartwich, Florian, 72762 Reutlingen (DE); Weigl, Andreas, 76351 Linkenheim-Hochstetten (DE); Mueller, Bernd, 71229 Leonberg (DE); Fuehrer, Thomas, 70839 Gerlingen (DE); Hugel, Robert, 76199 Karlsruhe (DE)

(56) Entgegenhaltungen:
- EP-A- 0 560 122
- EP-A- 0 650 106
- US-A- 5 694 542
- BERWANGER J ET AL: "byteflight - Neues Hochleistungs-Datenbussystem für sicherheitsrelevante Anwendungen" AUTOMOTIVE ELECTRONICS HANDBOOK, Januar 2000 (2000-01), Seiten 60-67, XP002230813
- BANERJEE S ET AL: "A TIME DRIVEN CONTROLLER AREA NETWORK FOR RELIABLE AUTOMATION" INDIAN JOURNAL OF POWER AND RIVER VALLEY DEVELOPMENT, BOOKS AND JOURNALS PRIVATE, LTD, IN, Bd. 47, Nr. 1/2, Januar 1997 (1997-01), Seiten 6-8, XP001028233 ISSN: 0019-5537
- FUEHRER T ET AL: "TIME TRIGGERED COMMUNICATION ON CAN (TIME TRIGGERED CAN - TTCAN)" PROCEEDINGS OF THE INTERNATIONAL CAN CONFERENCE, 2000, Seiten 1-7, XP002905415

## Beschreibung

### Stand der Technik

Die Erfindung betrifft Verfahren und Vorrichtung zum Austausch von Daten zwischen wenigstens zwei mit einem Bussystem verbundenen Teilnehmern gemäß den Merkmalen der unabhängigen Ansprüche.

Als Stand der Technik in der automobilen Vernetzung wird seit einigen Jahren das CAN-Protokoll eingesetzt. Die Kommunikation ist dort ereignisgesteuert geregelt. Sehr große Lasten können erzeugt werden, wenn das Senden verschiedener Nachrichten zur gleichen Zeit initiiert werden soll. Der nicht-destruktive Arbitrierungsmechanismus von CAN garantiert, daß sequentielle Senden aller Nachrichten gemäß der Priorität ihrer Identifier bzw. Kennungen. Für harte Echtzeitsysteme muß vorab eine Analyse der Laufzeiten und Buslasten für das gesamte System gemacht werden, um sicher zu gehen, daß alle Nachrichten-Deadlines eingehalten werden können (selbst unter Spitzenbelastung).

Es gibt bereits Kommunikationsprotokolle, die auf einer zeitgesteuerten Abarbeitung basieren, wie z.B. TTP/C oder Interbus-S. Die Besonderheit hierbei ist, daß der Buszugriff bereits vorab durch Vergabe von Sendezeitpunkten geplant wird. Während der Laufzeit kann es somit zu keinen Kollisionen kommen. Ebenso wird aber eine Spitzenlast am Kommunikationsbus vermieden. Dabei ist der Bus also häufig nicht vollständig ausgelastet.

Beim TTP/C-Protokoll wird die Zeitinformation durch Zuordnung der Kommunikationsobjekte zur globalen Zeit und Abgleich der lokalen Zeit der einzelnen Teilnehmer durch fehlertolerante Mittelung aller Zeitinformationen verteilt. Andere Bus-Protokolle leiten die Zeitinformation aus den einzelnen Bits einer Nachricht ab.

Damit ist nicht in jedem Fall ein kontrolliertes schellstmögliches Hochlaufen des Systems gewährleistet. Ebenso kann bei Ausfall des zeitgebenden Teilnehmers das gesamte System zusammenbrechen. Darüber hinaus ist eine automatische wiederaufnahme der Funktion nach dem Ausfall nicht immer sichergestellt.

Die europäische Patentanmeldung EP 0 650 106 A1 beschreibt ein in diesem Zusammenhang erwähnenswertes Verfahren zur Synchronisierung von Uhren in einem Netzwerk, bei dem durch Ablauf geeignet ausgelegter Timer in den beteiligten Uhren oder durch eine geeignete Phasenverschiebung der Sendezeitpunkte in den Uhren sichergestellt wird, dass auch bei Ausfall einer Uhr die jeweils präziseste der im Netzwerk verfügbaren Uhren die Zeitreferenz durch Versenden einer Zeitnachricht vorgibt.

Es zeigt sich, daß der Stand der Technik nicht in jeder Hinsicht optimale Ergebnisse zu liefern vermag.

### Vorteile der Erfindung

Die Erfindung beinhaltet somit vorteilhafterweise ein Verfahren und eine Vorrichtung zum Austausch von Daten in Nachrichten zwischen wenigstens zwei Teilnehmern, welche mittels eines Bussystems verbunden sind, wobei die, die Daten enthaltenden Nachrichten durch die Teilnehmer über das Bussystem übertragen werden und jeder Teilnehmer eine vorgebbare und/oder ermittelbare Zeitmarke enthält, wobei ein erster Teilnehmer in einer Funktion als Zeitgeber die Nachrichten zeitlich derart steuert, dass er wiederholt eine Referenznachricht, die eine Zeitinformation des ersten Teilnehmers enthält, in einem vorgebbaren zeitlichen Abstand über den Bus überträgt und wenn die Zeitmarke des zweiten Teilnehmers erreicht ist ohne dass eine Refenznachricht des ersten Teilnehmers den zweiten Teilnehmer erreicht, der wenigstens zweite Teilnehmer die Funktion des Zeitgebers dadurch übernimmt indem er eine eigene Referenznachricht mit einer eigenen Zeitinformation über das Bussystem überträgt.

Dabei wird als zugrundeliegendes Bussystem bzw. Busprotokoll insbesondere zweckmässigerweise der CAN-Bus eingesetzt. Die Erfindung bezieht sich aber allgemein auf jedes Bussystem bzw. Busprotokoll bei welchem eine objektorientierte Nachrichten- bzw. Datenübertragung eingesetzt wird, also die Nachricht und/oder die darin enthaltenen Daten durch eine Kennung (Identifier) eindeutig erkennbar sind. Dies gilt für alle Busse bei denen also nicht die Teilnehmer sondern die Nachrichten bzw. deren Daten adressiert werden, insbesondere den CAN-Bus.

Vorteilhafterweise werden verschiedene Teilnehmer, insbesondere alle Teilnehmer, potentiell als Zeitgeber vorgesehen und diese Teilnehmer können eigene Referenznachrichten mit einer eigenen Zeitinformation über den Bus übertragen, wenn die eigene Zeitmarke des Teilnehmers errreicht ist ohne eine Referenznachricht emfangen zu haben.

Dabei werden die Nachrichten vorteilhafterweise durch einen ersten Teilnehmer zeitlich derart gesteuert, dass der erste Teilnehmer wiederholt eine Referenznachricht in wenigstens einem vorgebbaren zeitlichen Abstand über den Bus überträgt und der zeitliche Abstand in Zeitfenster vorgebbarer Länge unterteilt wird, wobei die Nachrichten in den Zeitfenstern übertragen werden und der zeitliche Abstand in Zeitfenster vorgebbarer Länge unterteilt wird, wobei die Nachrichten in den Zeitfenstern übertragen werden.

Die Erfindung umfaßt vorteilhafterweise somit gegenüber dem Stand der Technik eine höhere Protokollschicht zu dem eigentlichen Bus(CAN)-Protokoll, das im Rahmen der erfindungsgemäßen zeitgesteuerten Kommunikation unverändert erhalten bleibt. Die zeitgesteuerte Kommunikation erlaubt es somit vorteilhafterweise, den Bus voll auszulasten und gleichzeitig die Latenzzeiten für jede Nachricht auf einem definierten Wert zu halten.

Die Erfindung umfaßt also eine zyklisch ablaufende Übertragung von Bus(CAN)-Nachrichten. Dadurch wird ein deterministisches und zusammensetzbares Kommunikationssystem erzeugt. Ein solches System wird bei dieser Erfindung im Weiteren als TTCAN bezeichnet. Ebenso wird im Weiteren von einem CAN-Bus ausgegangen, wobei wie oben genannt die Überlegungen allgemein für alle Bussysteme bzw. Busprotokolle mit objektorientierter Nachrichtenübertragung gelten.

Zweckmäßigerweise werden die Referenznachricht und die nachfolgenden Zeitfenster bis zur nächsten Referenznachricht zu einem ersten Zyklus vorgebbarer Länge und/oder vorgebbarer Struktur zusammengefasst, wobei die Struktur der Länge, Anzahl und zeitlichen Position der auf die Referenznachricht folgenden Zeitfenster in dem zeitlichen Abstand entspricht.

Weiterhin werden vorteilhafterweise mehrere erste Zyklen gleicher Struktur zu einem zweiten Zyklus zusammengefasst, wobei in dem zweiten Zyklus auch Nachrichten in Zeitfenstern wiederholt übertragen werden, deren zeitlicher Abstand größer ist als die zeitliche Länge des ersten Zyklus.

Zweckmässigerweise unterbleibt in wenigstens einem Zeitfenster des ersten oder des zweiten Zyklus eine zyklische Nachrichtenübertragung. In diesen zunächst leeren Zeitfenstern können dann arbitrierende Nachrichten übertragen werden, also solche, die nicht zyklisch übertragen werden müssen sondern wenn z.B. bestimmte Abläufe beendet sind zur Verfügung stehen.

Zweckmäßigerweise wird den Teilnehmern, die potentiell als Zeitgeber eingesetzt werden können eine Priorität bezüglich dieser Zeitgeberfunktion zugewiesen, wobei vorteilhafterweise zunächst der Teilnehmer die Funktion als Zeitgeber für den ersten Zyklus übernimmt dessen Zeitmarke zuerst erreicht ist ohne dass eine Referenznachricht bei diesem eingegangen ist und im folgenden ersten Zyklus des zweiten Zyklusses derjenige Teilnehmer die Funktion als Zeitgeber übernimmt, welcher die höchste Priorität besitzt. Dadurch ist zweckmässigerweise die Priorität der Zeitgeber konfigurierbar (logische Reihenfolge)

Durch vorgenannte Maßnahmen wird vorteilhafterweise die Zeitgeberfunktion und der zeitlich geordnete Kommunikationsablauf bzw. NAchrichtenaustausch nach der Initialisierung oder bei Ausfall eines Zeitgebers in einem zeitgesteuerten Bus-System, insbesondere CAN-Bus-System (TTCAN) sichergestellt.

Weiterhin von Vorteil ist das dabei entstehende kontrollierte, schnellstmögliche Hochlaufen des Systems aus Teilnehmern und Bussystem. Zweckmässigerweise wird ein System-Zusammenbruch bei Ausfall eines Zeitgebers (Knotens) vermieden und eine automatische Wiederaufnahme der Funktion nach Ausfall gewährleistet.

Weitere Vorteile und vorteilhafte Ausgestaltungen ergeben sich aus der Beschreibung und den Merkmalen der Ansprüche.

### Zeichnung

Die Erfindung wird nachfolgend anhand der in der Zeichnung enthaltenen Figuren dargestellt.

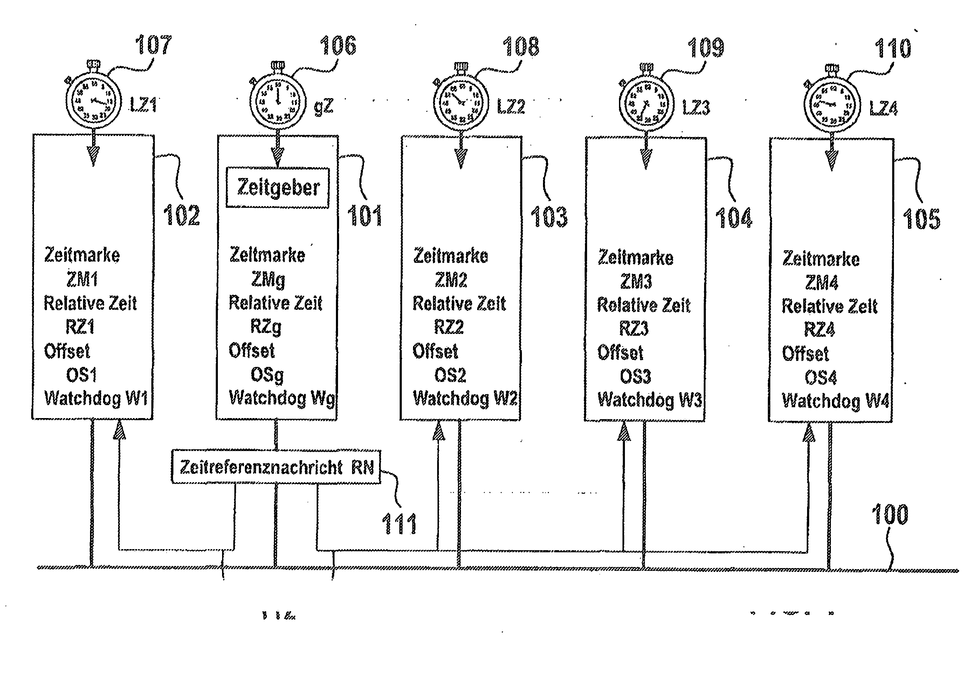

Dabei zeigt Figur 1 schematisch ein Bussystem mit mehreren Teilnehmern.

In Figur 2 ist der prinzipielle Ablauf der ersten Zyklen oder Basiszyklen und der zweiten Zyklen, der Gesamtzyklen über der Zeit dargestellt.

Figur 3 veranschaulicht im Detail die Anlage und Nachrichtenbelegung der Zeitfenster.

In Figur 4 wird dann ein Gesamtzyklus mit 7 Basiszyklen und diversen Sendegruppen der Nachrichten sowie arbitrierender Nachrichten dargestellt.

Figur 5 zeigt in Anlehnung an Figur 1 die Übertragung der Zeitgeberfunktion auf einen weiteren Teilnehmer, der als potentieller Zeitgeber ausgelegt ist.

Figur 6 offenbart in einem Zustandsdiagramm verschiedene Möglichkeiten für die Übergabe der Zeitgeberfunktion unter Berücksichtigung der Zeitgeber-Prioritäten.

### Beschreibung der Ausführungsbeispiele

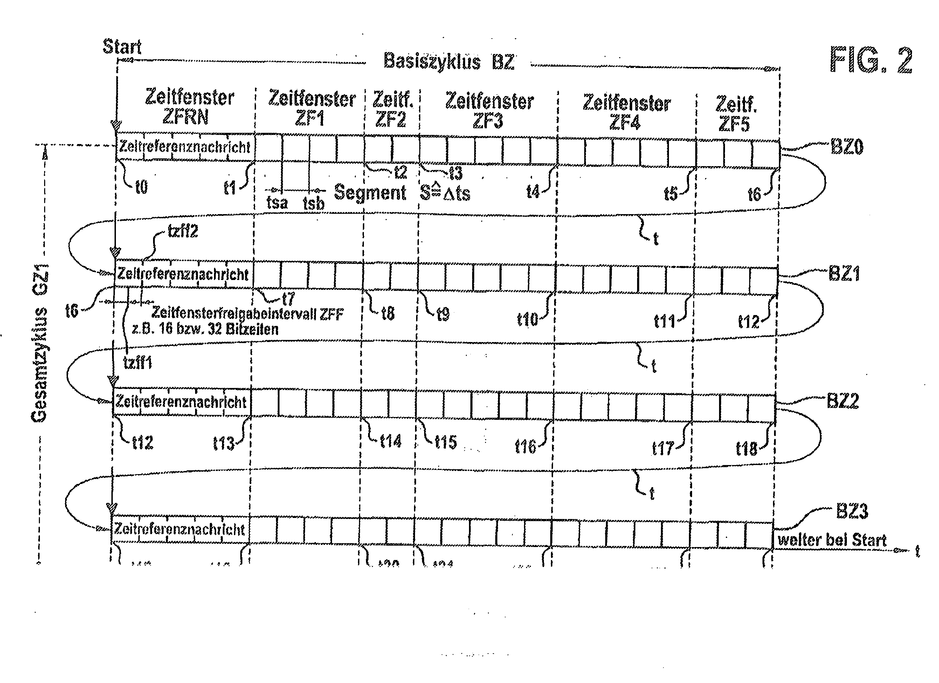

TTCAN basiert im wesentlichen auf einer zeitgesteuerten, periodischen Kommunikation, die durch einen Zeitgeber (Knoten, Teilnehmer) mit Hilfe einer Zeitreferenznachricht, oder kürzer Referenznachricht RN getaktet wird. Die Periode bis zur nächsten Referenznachricht RN wird als Basiszyklus bezeichnet und unterteilt sich in n Zeitfenster (siehe Figur 2). Jedes Zeitfenster erlaubt das exklusive Senden einer periodischen Nachricht mit unterschiedlicher Länge. Diese periodischen Nachrichten werden in einem TTCAN-Controller durch Verwendung von Zeitmarken, die mit dem Ablauf einer logischen relativen Zeit gekoppelt sind, gesendet. TTCAN erlaubt aber auch die Berücksichtigung von freien Zeitfenstern. Diese Zeitfenster können für sogenannte spontane Nachrichten genutzt werden, wobei der Zugriff innerhalb dieser Zeitfenster auf den Bus über das Arbitrierungsschema von CAN genutzt wird (arbitrierende Nachrichten). Die Synchronisation der Zeitgeber-Uhr (Globale Zeit gZ) mit der internen lokalen Zeit der einzelnen Knoten lZ1 bis lZ4 wird berücksichtigt und effizient umgesetzt.

Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein interners Mittel, wie eine Uhr, Zähler, Taktgenerator, etc.oder extern zu dem jeweiligen Teilnehmer übertragen werden kann. Die jeweilige lokale Zeitbasis lZ1 bis lZ4 ist insbesondere ein Zähler, z.B. 16-bit aufwärtszählend, der lediglich durch einen HW-Reset beeinflußt werden darf. Die lokale Zeitbasis ist hier in jedem Knoten bzw. Teilnehmer 102 bis 105 implementiert. Ein Teilnehmer, der Zeitgeber, 101 besitzt dabei ein exponierte Stellung. Seine Zeitbasis wird als globale Zeitbasis 106 mit der globalen Zeit gZ bezeichnet und ist entweder in dem Zeitgeber 101 implementiert oder wird extern an diesen übertragen. Die globale Zeit gZ wird prinzipiell in jedem Knoten aus der lokalen Zeitbasis 107 bis 110 bzw. der lokalen Zeit lZ (lZ1 bis lZ4) und einem Offset OS1 bis OS4 gebildet. Dieser Offset Osg beim Zeitgeber 101 ist in der Regel gleich Null (Osg = 0). Alle anderen Knoten bilden ihre Sicht auf die globale Zeit gZ aus der lokalen Zeit lZ (lZ1 bis lZ4) und dem lokalen Offset OS1 bis OS4 und OSg wenn OSg ≠ 0. Der Fall, dass OSg nicht Null ist, tritt z.B. auf wenn die globale Zeit gZ von aussen an den Zeitgeber 101 übertragen wird, und dieser zusätzlich eine eigene Zeitbasis 106 enthält. Dann wird auch der Zeitgeber auf die globale Zeit gZ geeicht und gZ und die Zeitbasis 106 stimmen eventuell nicht überein. Der lokale Offset ist die Differenz zwischen der lokalen Zeit zum Sendezeitpunkt (SOF, Start Of Frame) der Referenznachricht und der vom Zeitgeber in dieser Referenznachricht übertragenen Globalen Zeit.

### Lokale Zeitbasis und die Globale Zeit

Lokale Zeitbasis: Die lokale Zeitbasis ist ein Zähler, z.B. 16-bit aufwärtszählend, der lediglich durch einen HW-Reset beeinflußt werden darf. Die lokale Zeitbasis ist in jedem Knoten implementiert.

Referenzmarken Zwischenregister: Bei jedem angenommenen SOF wird das Zwischenregister mit der lokalen Zeitbasis geladen.

Referenzmarker: Wird die aktuelle Nachricht als Referenznachricht erkannt, dann wird der Wert aus dem Zwischenregister in den Referenzmarker übernommen (als lokale Referenzmarke). Der Referenzmarker wird z.B. als 16-Bit Register ausgelegt.

Zeitgeber-Referenzmarke: Das ist die von den Zeitnehmern empfangene Referenzmarke des Zeitgebers in der Referenznachricht.

Lokaler Offset zur Globalen Zeit: Der lokale Offset zur Globalen Zeit ist die Differenz zwischen der Referenzmarke im Zwischenregister und der in der Referenznachricht empfangenen Globalen Zeitmarke. Er wird zur Berechnung der Globalen Zeit aus der lokalen Zeit verwendet.
Der Offset des Zeitgebers selbst bleibt konstant. In der Referenznachricht sendet der Zeitgeber seine lokale Referenzmarke plus lokalem Offset.

Der Zeitgeber 101 ist also auch derjenige Knoten bzw. Teilnehmer, der die Zeitreferenznachricht 111 bzw. kürzer die Referenznachricht RN aussendet. Der Pfeil 112 zeigt an, dass die Referenznachricht RN 111 an die übrigen Teilnehmer 102 bis 105, insbesondere zeitgleich, versendet wird.

Die Referenznachricht RN ist die Basis für den zeitgesteuerten, periodischen Betrieb von TTCAN. Sie ist durch einen speziellen Identifier, eine spezielle Kennung, eindeutig gekennzeichnet und wird von allen Knoten, hier 102 bis 105, als Taktgeber empfangen. Sie wird von dem Zeitgeber 101 prinzipiell zyklisch ausgesendet. Die Referenznachricht kann folgende Daten beinhalten: Die Nummer des aktuellen Basiszyklus BZn, die Referenzmarke des Zeitgebers in Globaler Zeit.

Die Referenzmarke entsteht durch die Übernahme des internen Zählerstandes zum Zeitpunkt des "Start of Frame"-Bits (SOF) beim Empfang der Referenznachricht des Zeitgebers. Die Referenzmarke ist somit eine Momentaufnahme der lokalen Zeitbasis zum Empfangszeitpunkt der Referenznachricht. Die in den Teilnehmern aufgeführte Relative Zeit RZ1 bis RZ4 und RZg ist die Differenz zwischen der lokalen Zeitbasis und der letzten Referenzmarke. Alle Definitionen bezüglich der verwendeten Zeitmarken beziehen sich auf die Relative Zeit eines einzelnen Teilnehmers. Sie kann z.B. permanent als Signal vorliegen (z.B. durch Verknüpfung der beiden Registerwerte über Gatter). Die Referenzmarke bestimmt die Relative Zeit aller Knoten am TTCAN-Bus.

Der ebenfalls dargestellte Wartchdog Wg und W1 bis W4 ist ein spezieller relativer Zeitpunkt. In jedem Knoten wird ein solcher relativer Zeitpunkt (Watchdog) definiert, zu dem spätestens eine neue Referenznachricht und somit auch Referenzmarke erwartet wird. Der Watchdog stellt somit eine spezielle Zeitmarke dar. Der Watchdog dient vor allem in der Initialisierung und Reinitialisierung zur Überwachung, ob überhaupt eine Kommunikation zustande gekommen ist. Der Watchdog sollte in diesem Fall immer größer sein als der Abstand zwischen den Referenznachrichten.

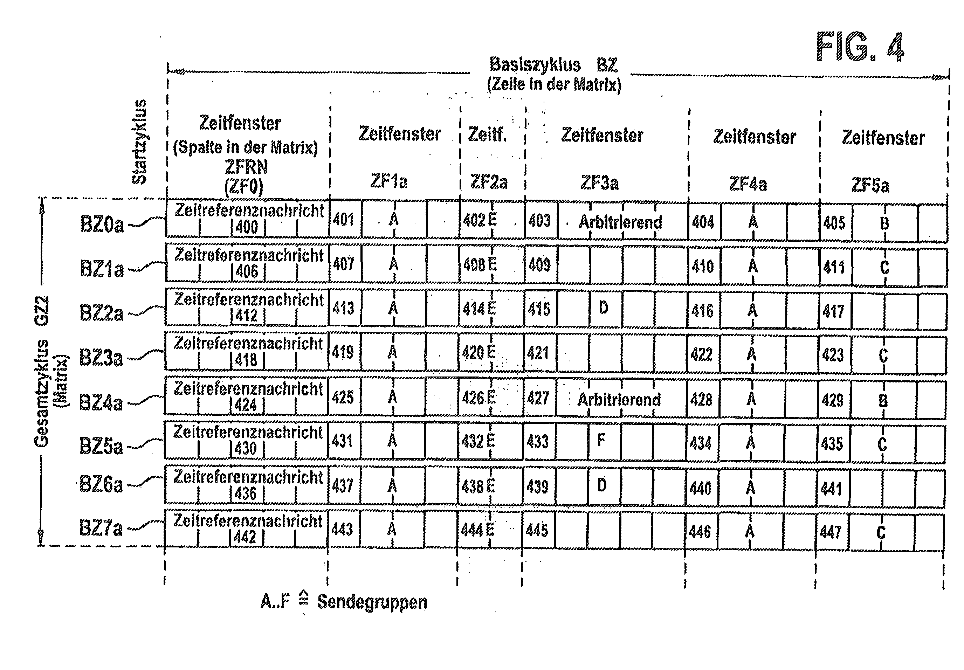

Dabei ist Eine Zeitmarke ein relativer Zeitpunkt, der die Beziehung zwischen der Relativen Zeit und einer Aktion im ursprünglichen Bus(CAN)-Controller herstellt. Eine Zeitmarke ist als Register dargestellt, wobei ein Controller mehrere Zeitmarken verwalten kann. Einer Nachricht können mehrere Zeitmarken zugeordnet sein (siehe z.B. in Figur 4: Sendegruppe A kommt sowohl in Zeitfenster ZF1a, als auch in Zeitfenster ZF4a vor).

Bezüglich der Applikation wird insbesondere ein Applikationswatchdog bedient. Dieser Watchdog muß von der Applikation regelmäßig bedient werden, um dem TTCAN-Controller den ordnungsgemäßen Betrieb zu signalisieren. Nur wenn dieser Watchdog bedient wird, werden die Nachrichten vom CAN-Controller gesendet.

Figur 2 zeigt das Prinzip der zeitgesteuerten, periodischen Nachrichten- bzw. Datenübertragung über der Zeit. Diese Nachrichtenübertragung wird durch den Zeitgeber mit Hilfe der Referenznachricht getaktet. Der Zeitraum t0 bis t6 wird dabei als Basiszyklus BZ bezeichnet und in k Zeitfenster (k ∈ ∠) unterteilt. Dabei werden von t0 bis t1, t6 bis t7, t12 bis t13 und t18 bis t19 also im Zeitfenster ZFRN die Referenznachrichten RN der jeweiligen Basiszyklen BZ0 bis BZ3 übertragen. Die Struktur der einer Referenznachricht RN nachfolgenden Zeitfenster ZF1 bis ZF5, also deren Länge (in Segmenten S mit Δts = tsb - tsa), deren Anzahl und deren zeitlichen Position, ist vorgebbar. Dadurch lässt sich aus mehreren Basiszyklen gleicher Struktur ein Gesamtzyklus GZ1 bilden, der bei t0 beginnt und bei t24 endet um erneut durchlaufen zu werden. Die Zeitfenster umfassen z.B. 2 bis 5 Segmente mit beispeilsweise je 32 Bitzeiten. Die Anzahl der Zeitfenster ist beispielsweise 2 bis 16, wobei auch nur ein Zeitfenster oder mehr als 16 möglich wären. Die Anzahl der Basiszyklen in einem Gesamtzyklus ist beispielsweise 2^{m} mit insbesondere m ≤ 4.

Mit tzff1 und tzff2 sind beispielhaft zwei Sendefreigabeintervalle bzw. Zeitfensterfreigabeintervalle gekennzeichnet, welche z.B. 16 oder 32 Bitzeiten dauern und den Zeitrahmen beschreiben innerhalb dessen mit dem Senden der Nachricht bezüglich des Basiszyklus begonnen werden darf.

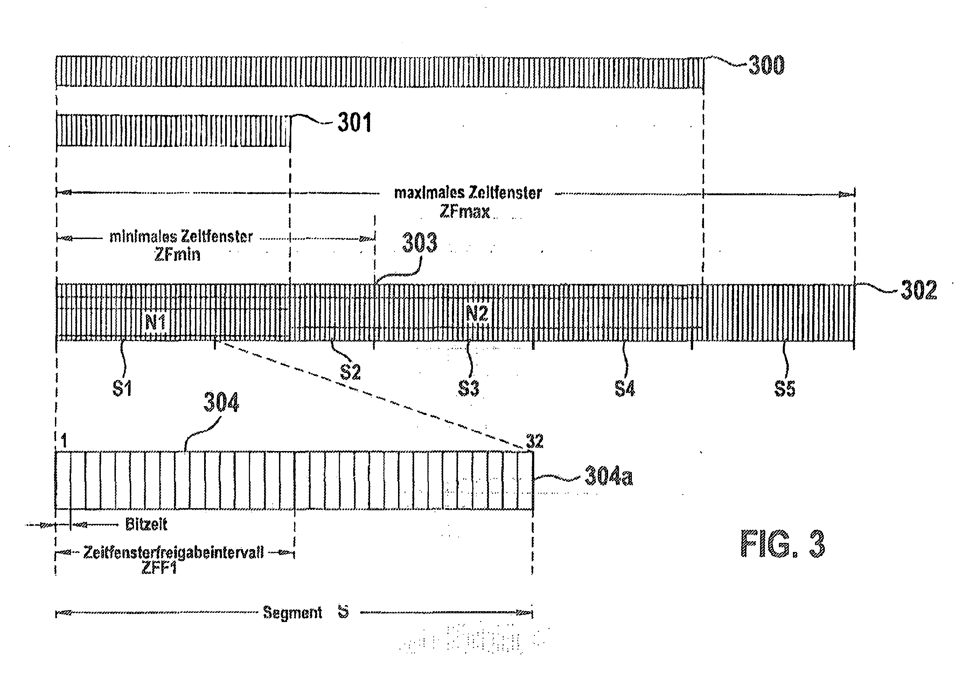

Jedes Zeitfenster erlaubt das exklusive Senden einer periodischen Nachricht mit unterschiedlicher Länge. In Figur 3 sind beispielhaft zwei Nachrichten unterschiedlicher Länge und die Zuordnung im Zeitfenster dargestellt. Nachricht 1 (N1) als Block 300 beinhaltet z.B. 130 Bit und Nachricht 2 (N2) als Block 301 beispielsweise 47 Bit.

Wie schon erwähnt können maximale und minimale Zeitfenster, abhängig von der Nachrichtenlänge vorgegeben werden, hier in diesem Beispiel z.B. zwischen 2 und 5 Segmenten pro Zeitfenster. Somit wird ein maximales Zeitfenster ZFmax als Block 302, das 5 Segmente (S1 bis S5) mit je 32 Bitzeiten umfasst und ein minimales Zeitfenster ZFmin als Block 303, welches 2 Segmente (S1 und S2) mit je 32 Bitzeiten umfasst vorgegeben. In diesen werden die Nachrichten N1 und N2 übertragen, wobei die Nachrichten also die Zeitfenster nicht vollständig ausfüllen müssen, vielmehr werden die Zeitfenstergrössen entsprechend der Nachrichtenlänge vorgegeben. ZFmax muss somit ausreichend Zeit bzw. Platz für die längste mögliche Nachricht, z.B.130 Bit bzw. Bitzeiten bieten und ZFmin kann an die kürzest mögliche Nachricht, z.B. 47 Bit, angepasst werden.

Generell ist das Zeitfenster der Zeitrahmen der für eine bestimmte Nachricht zur Verfügung steht (siehe Figur 3). Das Zeitfenster einer Nachricht wird mit dem Anliegen der Sendefreigabe geöffnet und der Beginn dieses Fensters stimmt prinzipiell mit einer definierten Zeitmarke überein. Die Länge des Zeitfensters wird aus i Segmenten mit beispielsweise 32 Bitzeiten (vgl Block 304a) bestimmt. Die Segmentierung zu insbesondere 32 Bitzeiten stellt dabei eine HW-freundliche Größe dar. Das Zeitfenster darf nicht kürzer sein, als die längste in diesem Zeitfenster vorkommende Nachricht. Die Bitzeit ist insbesondere die nominale CAN-Bitzeit.

Das Sendefreigabeintervall oder Zeitfensterfreigabeintervall beschreibt den Zeitrahmen, innerhalb dessen mit dem Senden der Nachricht begonnen werden darf. Das Sendefreigabeintervall ist ein Teil des Zeitfensters. Die Freigabe liegt also im Intervall Zeitmarke und Zeitmarke plus Delta an. Der Wert Delta ist deutlich kleiner als die Länge des Zeitfensters (z.B. 16 oder 32 Bitzeiten für ZFF1 oder ZFF2). Eine Nachricht deren Beginn nicht innerhalb des Sendefreigabeintervalls liegt, darf nicht gesendet werden.

Figur 4 stellt nun einen Gesamtzyklus (Sendematrix) GZ2 dar. Gesamtzyklus (Sendematrix): Alle Nachrichten (RN, A bis F und Arbitrierend) aller Teilnehmer werden als Komponenten einer Sendematrix organisiert (siehe Figur 4). Die Sendematrix besteht aus einzelnen Basiszyklen BZ0a bis BZ7a. Alle Basiszyklen des Gesamtzyklus GZ2 haben die gleiche Struktur. Diese Basiszyklen können wahlweise aus exklusiven (A bis F) und arbitrierenden Komponenten aufgebaut sein. Die Gesamtzahl der Zeilen (also Basiszyklen BZ0a bis BZ7a) ist hier eine Zahl 2^{m} = 8 mit m = 3.

Ein Basiszyklus (Zeile der Sendematrix) beginnt mit einer Referenzmarke in der Referenznachricht RN und besteht aus mehreren (i) aufeinander folgenden Zeitfenstern definierter Länge (erstes Zeitfenster ZF0 bzw. ZFRN für RN). Die Anordnung der Nachrichten innerhalb des Basiszyklus kann frei festgelegt werden. Ein Zeitfenster wird für exklusive Komponenten mit einem CAN Nachrichtenobjekt verknüpft. Ein Zeitfenster kann auch frei gelassen werden (409,421,441,417,445) oder für arbitrierende Komponenten genutzt werden (403, 427).

Eine Sendegruppe (Spalte der Sendematrix, A bis F) bilden Nachrichten, die immer im gleichen Zeitfenster, aber in unterschiedlichen Basiszyklen gesendet werden (siehe Figur 4). Somit kann eine Periode aufgebaut werden, z.B. A in ZF1a und ZF4a: 401,407,413,419,425,431,437,443 und 404,410,416,422,428,434,440,446. Innerhalb einer Sendegruppe kann ein Nachrichtenobjekt (eines Zeitfensters) mehrfach gesendet werden. Die Periode einer Nachricht innerhalb einer Sendegruppe muß eine Zahl 2^{l} sein, wobei gilt: l <= m.

Das Nachrichtenobjekt bzw. die Nachricht entspricht dem Nachrichtenobjekt des Busses, insbesondere in CAN, und umfaßt den Identifier bzw. die Kennung sowie die Daten selbst. In TTCAN wird das Nachrichtenobjekt um wenigstens eine der folgenden Eintragungen, bevorzugter Weise um alle drei, in der Sendematrix ergänzt: Zeitfenster, Basismarke, Wiederholrate.

Das Zeitfenster ist die Position (ZFO, ZF1a bis ZF5a) im Basiszyklus (BZn, Zeile der Sendematrix). Der Beginn des Zeitfensters ist definiert durch Erreichen einer bestimmten Zeitmarke.

Die Basismarke gibt an, in welchem Basiszyklus (BZ0a bis BZ7a) im Gesamtzyklus die Nachricht erstmalig gesendet wird.

Die Wiederholrate definiert nach wievielen Basiszyklen diese Übertragung wiederholt wird.

Um die Gültigkeit eines Nachrichtenobjekts für den CAN-Controller zu kennzeichnen, gibt es ein "permanentes Senderequest", das eine permanente Freigabe des Objekts bedeutet (für exklusive Komponenten siehe unten) und ein "einzelnes Senderequest", das eine einmalige Gültigkeit des Objekts bedeutet (für arbitrierende Komponenten siehe unten).

Die automatische Retransmission aus CAN ist für die Nachrichten in TTCAN zweckmässigerweise ausgeschaltet.

Im weiteren wird nun nochmals die Nachrichtenübertragung - Periodische Nachrichten und Spontane Nachrichten im Basiszyklus bzw. im Gesamtzyklus, insbesondere bezüglich der Applikation, beschrieben. Dabei werden wieder exklusive Nachrichten also periodische Nachrichten und arbitrierende also spontane Nachrichten unterschieden.

### Exklusive Nachrichtenobjekte (periodische Nachrichten):

Exklusive Nachrichtenobjekte werden gesendet, wenn der Applikationswatchdog gesetzt ist, die "permanente Sendeanforderung" der Applikation an den CAN-Controller gesetzt ist und das Sendefreigabeintervall des zugehörigen Zeitfensters geöffnet ist. In diesem Fall stimmt die Zeitmarke für das Nachrichtenobjekt mit der Relativen Zeit überein. Die permanente Sendeanforderung bleibt gesetzt, bis sie von der Applikation selbst zurückgesetzt wird.

### Arbitrierende Nachrichtenobjekte (spontane Nachrichten):

Arbitrierende Nachrichtenobjekte werden gesendet, wenn der Applikationswatchdog gesetzt ist, die "einzelne Sendeanforderung" von der Applikation an den CAN-Controller gesetzt ist und das Sendefreigabeintervall des nächsten dafür bestimmten Zeitfensters geöffnet ist. Dann ist die Zeitmarke für dieses Zeitfenster gleich der Relativen Zeit. Die Sendeanforderung wird nach erfolgreichem Senden vom CAN-Controller zurückgesetzt. Der gleichzeitige Zugriff verschiedener spontaner Nachrichten wird über die Bitarbitrierung von CAN geregelt. Verliert eine spontane Nachricht in diesem Zeitfenster gegen eine andere spontane Nachricht, so kann sie erst im nächsten dafür bestimmten Zeitfenster wieder um den Buszugang kämpfen.

Wird die gesamte Sendematrix bzw. der Gesamtzyklus durchlaufen, so ergibt sich eine zyklische, zeitgesteuerte Nachrichtenübertragung. Zeitgesteuert bedeutet, daß jede Aktion vom Erreichen eines bestimmten Zeitpunkts ausgeht (siehe Zeitmarken und Relative Zeit). Ist der Gesamtzyklus vollständig durchlaufen, d.h. alle Basiszyklen wurden einmal abgearbeitet, so wird wieder mit dem ersten Basiszyklus der Sendematrix begonnen. Es entstehen keine zeitlichen Lücken im Übergang. Ein Überblick eines solchen zeitgesteuerten Kommunikationssystems mit Zeitgeber ist in der Beschreibung und den Figuren der Zeichnung dargestellt worden.

In einem TTCAN-System beziehen sich alle Zeitfenster, in denen Nachrichten übertragen werden auf einen Referenzzeitpunkt, der am Anfang eines Basiszyklus von einem Referenzgeber allen Teilnehmern mitgeteilt wird.

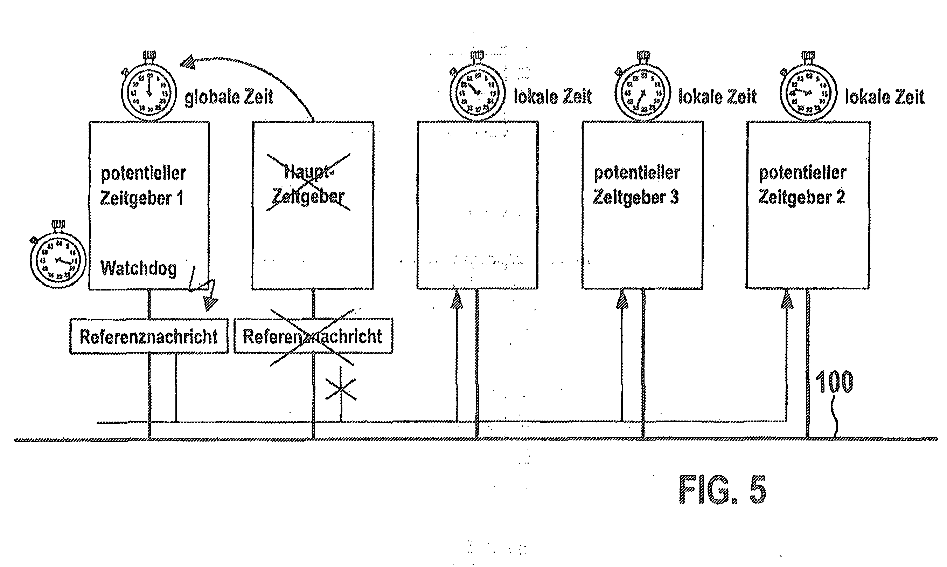

Figur 5 zeigt dazu ein System in Anlehnung an Figur 1. Der Zeitgeber besteht z.B. aus einem lokalen (z.B. 16-Bit breiten) Zähler (der lokalen oder globalen Zeitbasis), einem (z.B. 16-Bit breiten) Offset-Register, einem (z.B. 16-Bit breiten) Referenz-Register und einer Watchdog-Zeitmarke.

In einem System gibt es mehrere "potentiell" Zeitgeber, die in einer vorgegebenen Rangfolge eine Referenznachricht senden und damit Zeitgeber werden können.

Beim Hochlauf des Systems nach dem Einschalten kann jeder dafür vorgesehene Knoten die Zeitgeberfunktion übernehmen.

Dazu wird der lokale Zähler gestartet und der Zählerstand in das Referenz-Register geladen. Der lokale Zähler läuft, und entweder wird die Watchdog-Marke erreicht, oder es wird von einem anderen Knoten eine Referenzbotschaft empfangen.

Wird die Watchdog-Marke erreicht bevor eine Referenzbotschaft empfangen wurde, so übernimmt dieser Knoten die Zeitgeberfunktion, indem er eine Referenzbotschaft sendet und damit einen Basiszyklus startet.

Empfängt der Knoten vor Erreichen der Watchdog-Marke eine Referenzbotschaft von einem anderen Knoten, so synchronisiert er sich auf diese Referenz und prüft, ob seine eigene Zeitgeber-Priorität höher oder niedriger ist.

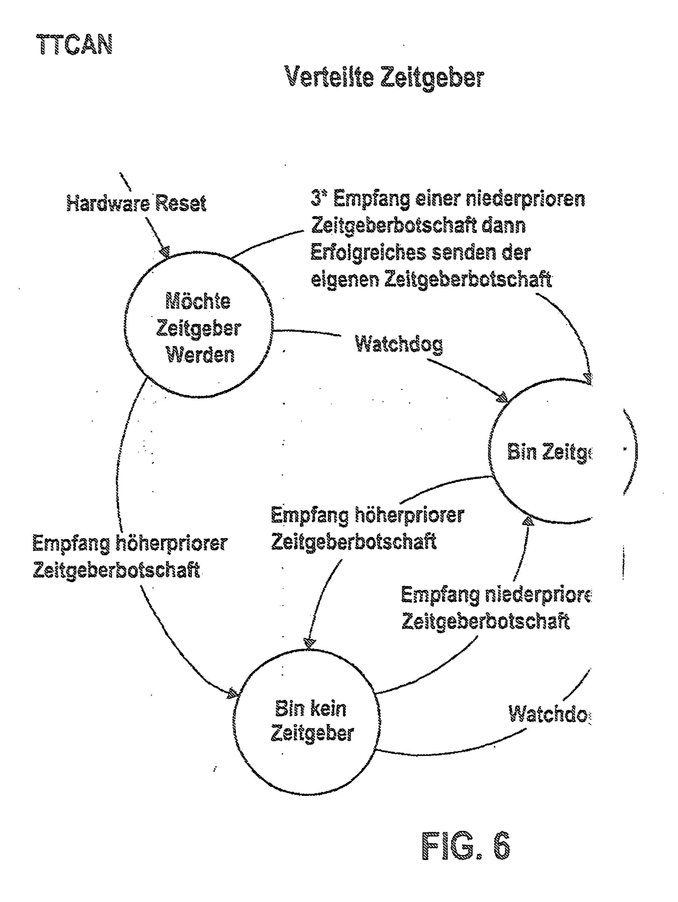

Unterschiedlichen Möglichkeiten dabei sind in dem Zustandsdiagramm in Figur 6 dargestellt. Im Falle niedrigerer Priorität arbeitet dieser Knoten als normaler "potentieller", aber nicht aktiver Zeitgeber weiter.

Ist aber seine Zeitgeber-Priorität höher als die der empfangenen Referenzbotschaft, so versucht er ab dem nächsten Referenzzeitpunkt Zeitgeber zu werden.

Dabei gibt es dann folgende Fälle:
a) Sendet der höherpriore Zeitgeber die Referenzbotschaft vor dem aktuellen Zeitgeber, so übernimmt er die Funktion des Zeitgebers und der bisherige Zeitgeber zieht sich zurück, da er die höher priore Referenzbotschaft sieht.
b) Senden beide Zeitgeber gleichzeitig, so kommt der Arbitriermechanismus des CAN-Protokolls zum tragen und der höherpriore Zeitgeber übernimmt die Funktion des Zeitgebers, da die Priorität mit dem Identifier der Referenzbotschaft verknüpft ist.
c) Kommt der höherpriore Zeitgeber zu spät, so versucht er in einem System ohne Driftkorrektur seine Referenzbotschaft so lange zu senden, bis sie durchkommt oder er eine noch höher priore empfängt. Eine Verschiebung der globalen Zeit wird dabei in Kauf genommen. Driftkorrektur bedeutet abgleichen der Ganggenauigkeit der in einem TTCAN-System verteilten lokalen Uhren um Sende- und Empfangszeitpunkte genauer zu synchronisieren. Bei einem System mit einer Driftkorrektur wird zum nächstmöglichen Referenzzeitpunkt wieder versucht, die Zeitgeber-Funktion zu übernehmen. Durch einen geeigneten Driftkorrekturalgorithmus wird sichergestellt, daß spätestens beim zweiten Basiszyklus der höherpriore Zeitgeber seine Referenzbotschaft nicht später als der aktuelle Zeitgeber auf den Bus legt und damit die Arbitrierung gewinnt und die Zeitgeberfunktion übernimmt.

Fällt der aktuelle Zeitgeber aus, so läuft in den "potentiellen" Zeitgebern der Watchdog abhängig von deren Priorität unterschiedlich schnell ab und der Knoten, dessen Watchdog als erster abläuft, übernimmt die Zeitgeberfunktion (s.o.)

Damit der Übergang von einem Zeitgeber zum anderen möglichst stetig in der Zeit ist, kann jeder Zeitgeber seine Sicht der globalen Zeit in seiner Referenzbotschaft übertragen.

Die Begriffe Zeitreferenznachricht, Referenznachricht, Referenzbotschaft und Zeitreferenzbotschaft sind gleichbedeutend. Eine Referenzbotschaft mit Zeitinformation bzw. die Zeitinformation in der Referenzbotschaft wird dann als Zeitgeberbotschaft (vgl. Figur 6) bezeichnet.

## Patentansprüche

1. Verfahren zum Austausch von Daten in Nachrichten zwischen wenigstens zwei Tellnehmem (101, ... 105), welche mittels eines Bussystems (100) verbunden sind,
wobei die die Daten enthaltenden Nachrichten durch die Teilnehmer über das Bussystem übertragen werden,
wobei ein erster Teilnehmer (101) in einer Funktion als Zeitgeber die Nachrichten zeitlich derart steuert, dass er wiederholt eine Referenznachricht (111), die eine Zeitinformation des ersten Teilnehmers enthält, in einem vorgebbaren zeitlichen Abstand über den Bus überträgt,
wobei in dem wenigstens zweiten Teilnehmer (**102,103,104,105**) ein spezieller relativer Zeitpunkt als **vorgebbare** Zeitmarke **(W1, W2, W3, W4)** definiert ist, zu dem spätestens eine Referenznachricht **(111)** des ersten Teilnehmers **(101)** erwartet wird,
**dadurch gekennzeichnet, dass** ein **Teilnehmer mehrere Zeitmarken (Zg, Z1, ..., Z4; Wg, W1, ..., W4) verhalten kann,**
**wobei eine Zeitmarke (Zg, Z1, ..., Z4; Wg, W1, ..., W4) eine Beziehung zwischen einer relativen Zeit (RZg, RZ1, ..., RZ4) und einer Aktion im Teilnehmer herstellt,**
**wobei,** wenn die **vorgebbare** Zeitmarke **(W1, W2, W3, W4)** des zweiten Teilnehmers **(102, 103, 104,105)** erreicht ist, ohne dass eine Referenznachricht **(111)** des ersten Teilnehmers **(101)** den zweiten Teilnehmer erreicht, der wenigstens zweite Teilnehmer die Funktion des Zeitgebers übernimmt, indem er eine eigene Referenznachricht mit einer eigenen Zeitinformation über das Bussystem überträgt

2. Verfahren nach Anspruch 1, **dadurch gekennzeichnet, dass** verschiedene Teilnehmer, potentiell als Zeitgeber vorgesehen werden können und dass diese **als potentielle Zeitgeber vorgesehenen** Teilnehmer eigene Referenznachrichten mit einer eigenen Zeitinformation über den Bus übertragen, wenn die eigene Zeitmarke des **jeweiligen** Teilnehmers erreicht ist, ohne **dass von dem jeweiligen Teilnehmer** eine Referenznachricht empfangen wurde.

3. Verfahren nach Anspruch 1, **dadurch gekennzeichnet, dass** der zeitliche Abstand, in Zeitfenster (ZFRN, ZF1, ZF2, ...) vorgebbarer Länge unterteilt wird, wobei die Nachrichten in den Zeitfenstern übertragen werden.

4. Verfahren nach Anspruch 1 und 3, **dadurch gekennzeichnet, dass** eine Referenznachricht und die nachfolgenden Zeitfenster bis zur nächsten Referenznachricht zu einem ersten Zyklus (BZ0, BZ1, ...) vorgebbarer Länge und/oder vorgebbarer Struktur zusammengefasst werden, wobei die Struktur durch Festlegung wenigstens einer der Größen Länge, Anzahl oder zeitliche Position für die auf die Referenznachricht folgenden Zeitfenster gegeben ist.

5. Verfahren nach Anspruch 1 und 4, **dadurch gekennzeichnet, dass** mehrere erste Zyklen gleicher Struktur zu einem zweiten Zyklus (GZ1) zusammengefasst werden, wobei in dem zweiten Zyklus auch Nachrichten in Zeitfenstern wiederholt übertragen werden, deren zeitlicher Abstand größer ist als die zeitliche Länge des ersten Zyklus.

6. Verfahren nach Anspruch 1, **dadurch gekennzeichnet, dass** den Teilnehmern, die als Zeitgeber einsetzbar sind eine Priorität bezüglich der Funktion als Zeitgeber zugewiesen wird.

7. Verfahren nach Anspruch 5 und 6, **dadurch gekennzeichnet, dass** zunächst der Teilnehmer die Funktion als Zeitgeber für den ersten Zyklus übernimmt dessen Zeitmarke zuerst erreicht ist ohne dass eine Referenznachricht bei diesem eingegangen ist und im folgenden ersten Zyklus des zweiten Zyklusses derjenige Teilnehmer die Funktion als Zeitgeber übernimmt, welcher die höchste Priorität besitzt

8. Verfahren nach Anspruch 3, **dadurch gekennzeichnet, dass** in den Zeitfenstern Nachrichten zyklisch übertragen werden.

9. Verfahren nach Anspruche 3 und/oder 4, **dadurch gekennzeichnet, dass** in wenigstens einem Zeitfenster des ersten oder des zweiten Zyklus eine zyklische Nachrichtenübertragung unterbleibt und in diesem Zeitfenster arbitrierende Nachrichten übertragen werden.

10. Vorrichtung mit wenigstens zwei Teilnehmern (101, ... 105) und einem Bussystem (100) zum Austausch von Daten in Nachrichten zwischen den wenigstens zwei Teilnehmern, welche mittels des Bussystems verbunden sind, wobei die, die Daten enthaltenden Nachrichten durch die Teilnehmer über das Bussystem übertragen werden,
wobei ein erster Teilnehmer (101) in einer Funktion als Zeitgeber die Nachrichten zeitlich derart steuert, dass er wiederholt eine Referenznachricht (111), die eine Zeitinformaton des ersten Teilnehmers enthält, in einem vorgebbaren zeitlichen Abstand über den Bus überträgt,
wobei in dem wenigstens zweiten Teilnehmer **(102, 103, 104, 105)** ein spezieller relativer Zeitpunkt als **vorgebbare** Zeitmarke **(W1, W2, W3, W4)** definiert ist, zu dem spätestens eine Referenznachricht (111) des ersten Teilnehmers **(101)** erwartet wird,
**dadurch gekennzeichnet dass ein Teilnehmer mehrere Zeitmarken (Zg, Z1, ..., Z4; Wg, W1, ..., W4) verwalten kann,**
**wobei eine Zeitmarke (Zg, Z1, ..., Z4; Wg, W1, ..., W4) eine Beziehung zwischen einer relativen Zeit (RZg, RZ1, ..., RZ4) und einer Aktion im Teilnehmer herstellt,**
**wobei,** wenn die **vorgebbaren** Zeitmarke **(W1, W2, W3, W4)** des zweiten Teilnehmers **(102, 103,104, 105)** erreicht ist, ohne dass eine Referenznachricht **(111)** des ersten Teilnehmers **(101)** des ersten Teilnehmers den zweiten Teilnehmer erreicht, der wenigstens zweite Teilnehmer die Funktion des Zeitgebers übernimmt, indem er eine eigene Referenznachricht mit einer eigenen Zeitinformation über das Bussystem überträgt.

## Claims

1. Method for the exchange of data in messages between at least two subscribers (101, ... 105) which are connected by means of a bus system (100),
wherein the messages containing the data are transmitted by the subscribers via the bus system, wherein a first subscriber (101), in a function as timer, controls the messages in time in such a manner that it repeatedly transmits a reference message (111), which contains a time information item of the first subscriber, in a predeterminable time interval via the bus,
wherein in the at least second subscriber (102, 103, 104, 105) a special relative time is defined as predeterminable time marker (W1, W2, W3, W4) at which a reference message (111) of the first subscriber (101) is expected at the latest, **characterized in that** a subscriber can administer a plurality of time markers (Zg, Z1, ..., Z4; Wg, W1, ..., W4),
wherein a time marker (Zg, Z1, ..., Z4; Wg, W1, ..., W4) establishes a relation between a relative time (RZg, RZ1, ..., RZ4) and an action in the subscriber,
wherein, when the predeterminable time marker (W1, W2, W3, W4) of the second subscriber (102, 103, 104, 105) is reached without a reference message (111) of the first subscriber (101) reaching the second subscriber, the at least second subscriber takes over the function of the timer **in that** it transmits its own reference message with its own time information item via the bus system.

2. Method according to Claim 1, **characterized in that** various subscribers can potentially be provided as timers and **in that** these subscribers provided as potential timers transmit their own reference messages with their own time information item via the bus when the own time marker of the respective subscriber is reached without a reference message having been received by the respective subscriber.

3. Method according to Claim 1, **characterized in that** the time interval is subdivided into time windows (ZFRN, ZF1, ZF2, ...) of predeterminable length, the messages being transmitted in the time windows.

4. Method according to Claim 1 and 3, **characterized in that** a reference message and the subsequent time windows are combined to form a first cycle (BZ0, BZ1, ...) of predeterminable length and/or predeterminable structure until the next reference message, wherein the structure is given by the establishment of at least one of the quantities of length, number or temporal position for the time windows following the reference message.

5. Method according to Claim 1 and 4, **characterized in that** a plurality of first cycles of the same structure are combined to form a second cycle (GZ1), wherein in the second cycle, messages are also repeatedly transmitted in time windows, the time interval of which is greater than the temporal length of the first cycle.

6. Method according to Claim 1, **characterized in that** the subscribers which can be utilized as timers are assigned a priority with respect to the function as timer.

7. Method according to Claim 5 and 6, **characterized in that** initially the subscriber takes over the function as timer for the first cycle, the time marker of which is reached first without a reference message having been received by it and in the following first cycle of the second cycle, the subscriber which has the highest priority takes over the function as timer.

8. Method according to Claim 3, **characterized in that** in the time windows, messages are transmitted cyclically.

9. Method according to Claim 3 and/or 4, **characterized in that** in at least one time window of the first or of the second cycle, a cyclic message transmission is omitted and in this time window arbitrating messages are transmitted.

10. Device comprising at least two subscribers (101, ..., 105) and one bus system (100) for the exchange of data in messages between the at least two subscribers which are connected by means of the bus system, wherein the messages containing the data are transmitted by the subscribers via the bus system,
wherein a first subscriber (101), in a function as timer, controls the messages in time in such a manner that it repeatedly transmits a reference message (111), which contains a time information item of the first subscriber, in a predeterminable time interval via the bus,
wherein in the at least second subscriber (102, 103, 104, 105), a special relative time is defined as predeterminable time marker (W1, W2, W3, W4) at which a reference message (111) of the first subscriber (101) is expected at the latest, **characterized in that** a subscriber can administer a plurality of time markers (Zg, Z1, ..., Z4; Wg, W1, ..., W4),
wherein a time marker (Zg, Z1, ..., Z4; Wg, W1, ..., W4) establishes a relation between a relative time (RZg, RZ1, ..., RZ4) and an action in the subscriber,
wherein, when the predeterminable time marker (W1, W2, W3, W4) of the second subscriber (102, 103, 104, 105) is reached, without a reference message (111) of the first subscriber (101) reaching the second subscriber, the at least second subscriber takes over the function of the timer **in that** it transmits its own reference message with its own time information via the bus system.

## Revendications

1. Procédé pour échanger des données dans des messages entre au moins deux abonnés (101, ..., 105) qui sont reliés au moyen d'un système de bus (100),
les messages qui contiennent les données étant transmis par les abonnés sur le système de bus,
un premier abonné (101), dans une fonction en tant que générateur d'horloge, commandant les messages dans le temps de telle sorte qu'il transmet sur le bus, de manière répétée et à un intervalle de temps qui peut être prédéfini, un message de référence (111) qui contient une information de temps du premier abonné,
un instant relatif spécial étant défini dans l'au moins un deuxième abonné (102, 103, 104, 105) en tant que repère temporel (W1, W2, W3, W4) qui peut être prédéfini auquel est attendu au plus tard un message de référence (111) du premier abonné (101),
**caractérisé en ce qu'**un abonné peut gérer plusieurs repères temporels (Zg, Z1, ..., Z4 ; Wg, W1, ..., W4),
un repère temporel (Zg, Z1, ..., Z4 ; Wg, W1, ..., W4) établissant une relation entre un temps relatif (RZg, RZ1, ..., RZ4) et une action dans l'abonné,
l'au moins un deuxième abonné, lorsque le repère temporel (W1, W2, W3, W4) qui peut être prédéfini du deuxième abonné (102, 103, 104, 105) est atteint sans qu'un message de référence (111) du premier abonné (101) n'atteigne le deuxième abonné, prenant en charge la fonction de générateur d'horloge par le fait qu'il transmet sur le système de bus un message de référence propre avec une information de temps propre.

2. Procédé selon la revendication 1, **caractérisé en ce que** différents abonnés peuvent être prévus potentiellement en tant que générateurs d'horloge et **en ce que** ces abonnés prévue en tant que générateurs d'horloge potentiels transmettent sur le bus des messages de référence propres avec une information de temps propre lorsque le repère temporel propre de l'abonné correspondant est atteint sans qu'un message de référence n'ait été reçu par l'abonné correspondant.

3. Procédé selon la revendication 1, **caractérisé en ce que** l'intervalle de temps est divisé en créneaux temporels (ZFRN, ZF1, ZF2, ...) ayant une longueur qui peut être prédéfinie, les messages étant transmis dans les créneaux temporels.

4. Procédé selon les revendications 1 et 3, **caractérisé en ce qu'**un message de référence et le créneau temporel suivant jusqu'au message de référence suivant sont regroupés en un premier cycle (BZ0, BZ1, ...) ayant une longueur qui peut être prédéfinie et/ou une structure qui peut être prédéfinie, la structure étant donnée en fixant au moins l'une des grandeurs longueur, nombre ou position dans le temps pour les créneaux temporels qui suivent le message de référence.

5. Procédé selon les revendications 1 et 4, **caractérisé en ce que** plusieurs premiers cycles ayant la même structure sont regroupés en un deuxième cycle (GZ1), des messages dont l'intervalle de temps est supérieur à la longueur dans le temps du premier cycle étant également transmis de manière répétée dans le deuxième cycle dans des créneaux temporels.

6. Procédé selon la revendication 1, **caractérisé en ce qu'**une priorité concernant la fonction en tant que générateur d'horloge est attribuée aux abonnés qui peuvent être utilisés en tant que générateurs d'horloge.

7. Procédé selon les revendications 5 et 6, **caractérisé en ce que** l'abonné qui prend initialement la fonction de générateur d'horloge pendant le premier cycle est celui dont le repère temporel est atteint en premier sans qu'un message de référence ne lui soit parvenu et, dans le premier cycle suivant du deuxième cycle, l'abonné qui prend en charge la fonction de générateur d'horloge est celui qui possède la priorité la plus élevée.

8. Procédé selon la revendication 3, **caractérisé en ce que** les messages sont transmis de manière cyclique dans les créneaux temporels.

9. Procédé selon les revendications 3 et/ou 4, **caractérisé en ce qu'**une transmission cyclique de message est inhibée dans au moins un créneau temporel du premier ou du deuxième cycle et des messages d'arbitrage sont transmis dans ce créneau temporel.

10. Dispositif comprenant au moins deux abonnés (101, ..., 105) et un système de bus (100) pour échanger des données dans des messages entre les aux moins deux abonnés, lesquels sont reliés ensemble au moyen du système de bus, les messages qui contiennent les données étant transmis par les abonnés sur le système de bus,
un premier abonné (101), dans une fonction en tant que générateur d'horloge, commandant les messages dans le temps de telle sorte qu'il transmet sur le bus, de manière répétée et à un intervalle de temps qui peut être prédéfini, un message de référence (111) qui contient une information de temps du premier abonné,
un instant relatif spécial étant défini dans l'au moins un deuxième abonné (102, 103, 104, 105) en tant que repère temporel (W1, W2, W3, W4) qui peut être prédéfini auquel est attendu au plus tard un message de référence (111) du premier abonné (101),
**caractérisé en ce qu'**un abonné peut gérer plusieurs repères temporels (Zg, Z1, ..., Z4 ; Wg, W1, ..., W4),
un repère temporel (Zg, Z1, ..., Z4 ; Wg, W1, ..., W4) établissant une relation entre un temps relatif (RZg, RZ1, ..., RZ4) et une action dans l'abonné,
l'au moins un deuxième abonné, lorsque le repère temporel (W1, W2, W3, W4) qui peut être prédéfini du deuxième abonné (102, 103, 104, 105) est atteint sans qu'un message de référence (111) du premier abonné (101) n'atteigne le deuxième abonné, prenant en charge la fonction de générateur d'horloge par le fait qu'il transmet sur le système de bus un message de référence propre avec une information de temps propre.
